# EUROPÄISCHE PATENTSCHRIFT

(11) **EP 0 671 569 B1**
(45) Veröffentlichungstag und Bekanntmachung des Hinweises auf die Patenterteilung: **28.07.1999**
(21) Anmeldenummer: 95101425.7
(22) Anmeldetag: 02.02.1995
(51) Int. Cl.: F16D 3/18

(54) **Drehgelenkkupplung, insbesondere an einer Gelenkwelle einer Exzenterschneckenmaschine**
Rotary universal joint, especially for excentric screw machine
Joint universel à rotation, notamment pour machine à vis sans fin excentrique

(30) Priorität: 10.02.1994 DE 4404256
(43) Veröffentlichungstag der Anmeldung: 13.09.1995
(73) Patentinhaber: Netzsch Mohnopumpen GmbH, D-84478 Waldkraiburg (DE)
(72) Erfinder: Hantschk, Günther, D-84478 Waldkraiburg (DE); Franz, Günter, D-84478 Waldkraiburg (DE); Maier, Bernd, D-84555 Jettenbach (DE)
(74) Vertreter: Goetz, Rupert, Dipl.-Ing.

(56) Entgegenhaltungen:
- EP-A- 0 133 325
- EP-A- 0 297 615
- PATENT ABSTRACTS OF JAPAN vol. 16 no. 278 (M-1268) ,22.Juni 1992 & JP-A-04 069409 (SUZUKI) 4.März 1992,

## Beschreibung

Die Erfindung betrifft eine Drehgelenkkupplung nach dem Oberbegriff des Anspruchs 1.

Eine solche Drehgelenkkupplung ist aus der EP 0 297 615 B1 bekannt, auf deren Offenbarungsgehalt hiermit ausdrücklich Bezug genommen wird. Bei Drehgelenkkupplungen der dort beschriebenen Art wurde in manchen Fällen festgestellt, daß das Drehgelenk nach einem Auseinandernehmen und der anschließenden Wiedermontage nur noch eine relativ geringe Standzeit erreicht. Eine Demontage und anschließende Wiedermontage der Drehgelenkkupplung kann beispielsweise im Zuge von Wartungsarbeiten erforderlich sein. So muß in der Regel bei einer Exzenterschneckenpumpe die Drehgelenkkupplung immer dann auseinandergenommen und anschließend wieder zusammengebaut werden, wenn der Rotor der Exzenterschneckenpumpe ausgetauscht wird.

Aus der JP-A-4-069 409 ist eine Klauenkupplung zur Verbindung zweier rotierender Teile bekannt, die zwischen den beiden rotierenden Teilen Dämpfungselemente aufweist. Um einen falschen, zur Funktionsuntüchtigkeit der Dämpfungselemente führenden Einbau derselben zu verhindern, ist eine Klaue an jedem rotierenden Teil breiter als die übrigen Klauen ausgebildet. Auf diese Weise können die Dämpfungselemente nur funktionsrichtig in die Klauenkupplung eingebaut werden.

Der Erfindung liegt die Aufgabe zugrunde, eine Drehgelenkkupplung der eingangs beschriebenen Gattung zu schaffen, deren Standzeit unter vergleichbaren Betriebsbedingungen gegenüber der bekannten Drehgelenkkupplung erhöht ist.

Diese Aufgabe ist erfindungsgemäß mit einer Drehgelenkkupplung gelöst, die die im Anspruch 1 genannten Merkmale aufweist. Der Erfindung liegt die Erkenntnis zugrunde, daß der Verschleiß einer gattungsgemäßen Drehgelenkkupplung nach einem Auseinandernehmen des Drehgelenks deshalb besonders erhöht sein kann, weil die Kugelschale(n) und der innenverzahnte Ring sowie der innenverzahnte Ring und die Nabe in aller Regel beim erneuten Zusammenbau eine Stellung zueinander einnehmen, die sich von der Positionierung des erstmaligen Zusammenbaus der Drehgelenkkupplung unterscheidet. Die im Vergleich zur erstmaligen Positionierung andere Lage der genannten Teile zueinander hat zur Folge, daß sich die Drehgelenkkupplung wieder neu einlaufen muß. Ist aber die Verbindung insbesondere der im Normalbetrieb höher belasteten Kugelschale und des innenverzahnten Rings einerseits und die Verbindung des innenverzahnten Rings und der Nabe andererseits so ausgeführt, daß sich nach einem Auseinandernehmen des Drehgelenks beim erneuten Zusammenbau die ursprüngliche Positionierung zwangsweise wieder einstellt, findet ein erneuter Einlaufvorgang nicht mehr statt und die Standzeit der Drehgelenkkupplung ist erhöht.

Durch die erfindungsgemäß geforderte eindeutige und sicher reproduzierbare Positionierung von Kugelschale(n) und innenverzahntem Ring einerseits sowie von innenverzahntem Ring und Nabe andererseits ist gewährleistet, daß bei einem erneutem Zusammenbau des Gelenks immer dieselben, durch die Kugelsegmente bzw. die Kugelschalen gebildeten sphärischen Flächen zusammenwirken.

Erfindungsgemäß ist demnach erkannt worden, daß es entscheidend darauf ankommt, die Verbindung der genannten Teile so zu gestalten, daß sie nach einem Auseinandernehmen des Gelenks nur in ihrer ursprünglichen Positionierung wieder zusammengefügt werden können.

Bei einer Ausführungsform der erfindungsgemäßen Drehgelenkkupplung, bei der die Schmiermittelkanäle durch Weglassen von Zähnen der drehmomentübertragenden Kupplungspaarung gebildet sind, beispielsweise durch Weglassen von zwei Zähnen der Außenverzahnung, und bei der die beiden als Schmiermittelkanäle ausgebildeten Nuten eine Tiefe haben, die geringer als die entsprechende Zahnhöhe ist, wird dies hinsichtlich des innenverzahnten Rings und der Nabe dadurch erreicht, daß die drehmomentübertragende Kupplungspaarung eine ungerade Zähnezahl aufweist. Auf diese Weise ist gewährleistet, daß die Schmiermittelkanäle einen ungleichmäßigen Umfangsabstand voneinander haben, wodurch ein Zusammenfügen von Außenverzahnung und innenverzahntem Ring in nur einer einzigen Position möglich ist. Weist die drehmomentübertragende Kupplungspaarung eine gerade Zähnezahl auf, läßt sich die eindeutige Positionierung von innenverzahntem Ring und Nabe bei dieser Ausführungsform dadurch erreichen, daß die Zähnezahl, die sich im Uhrzeigersinn zwischen den durch Fortlassen von Gegenkörpern gebildeten Schmiermittelkanälen befindet, sich von der im Gegenuhrzeigersinn zwischen den Schmiermittelkanälen befindenden Zähnezahl um mindestens zwei unterscheidet. Im Gegensatz zur aus der EP 0 297 615 B1 bekannten Drehgelenkkupplung liegen sich die Schmiermittelkanäle also nicht im wesentlichen direkt gegenüber, sondern sind um mindestens einen Zahn zueinander versetzt angeordnet.

Bei einer anderen Ausführungsform der erfindungsgemäßen Drehgelenkkupplung wird die eindeutig reproduzierbare Stellung bzw. Positionierung von innenverzahntem Ring und Nabe durch eine unregelmäßige Zahnteilung der drehmomentübertragenden Kupplungspaarung erreicht. Diese unregelmäßige Zahnteilung hat wiederum zur Folge, daß sich die Nabe mit der an ihr ausgebildeten Außenverzahnung und der innenverzahnte Ring in nur einer einzigen Position zusammenfügen lassen.

Die eindeutige Stellung zumindest der im Normalbetrieb höher belasteten Kugelschale und des innenverzahnten Rings zueinander wird bei einer Ausführungsform der erfindungsgemäßen Drehgelenkkupplung durch eine stoffschlüssige Verbindung zwischen dem innenverzahntem Ring und der entsprechenden Kugelschale erreicht. Der Stoffschluß zwischen der entsprechenden Kugelschale und dem innenverzahntem Ring wird vorteilhaft mittels eines Klebers hergestellt. Der Stoffschluß kann aber auch durch Hartlöten, Verschweißen, oder durch andere, zu einem Stoffschluß führende Verbindungstechniken erreicht werden.

Bei einer anderen Ausführungsform einer erfindungsgemäßen Drehgelenkkupplung ist die eindeutige Stellung von innenverzahntem Ring und Kugelschale durch eine kraftschlüssige Verbindung zwischen den genannten Teilen hergestellt, die beispielsweise durch Aufschrumpfen des innenverzahnten Rings auf einen Endbereich der entsprechenden Kugelschale erhalten wird.

Bei einer noch anderen Ausführungsform der erfindungsgemäßen Drehgelenkkupplung ist die eindeutig reproduzierbare Stellung von innenverzahntem Ring und zumindest der im Normalbetrieb höher belasteten Kugelschale zueinander durch mindestens zwei im Gehäuse angeordnete Paßfedern unterschiedlicher Breite erreicht, die die Kugelschale mit dem innenverzahnten Ring formschlüssig verbinden. Die unterschiedliche Breite der zumindest zwei Paßfedern bewirkt, daß die Kugelschale und der innenverzahnte Ring in nur einer einzigen Position zusammengefügt werden können. Alternativ kann dies auch durch mindestens zwei im Gehäuse angeordnete Paßfedern gleicher Breite erreicht werden, deren Umfangsabstand voneinander ungleichmäßig ist. Gemäß einer weiteren Alternative können die mindestens zwei Paßfedern im Gehäuse so angeordnet sein, daß sie in einem Querschnitt normal zur Gehäuselängsachse eine gemeinsame Symmetrielinie aufweisen, die zu einer durch den Mittelpunkt der Drehgelenkkupplung verlaufenden Geraden achsparallel verschoben ist. Auch diese Anordnung gestattet das Zusammenfügen von Kugelschale und innenverzahntem Ring in nur einer einzigen Position. Die vorgenannten Paßfederanordnungen bzw. -ausbildungen können miteinander kombiniert werden, zur Erzielung einer eindeutigen Positionierung der entsprechenden Kugelschale und des innenverzahnten Rings zueinander ist dies jedoch nicht notwendig.

Gemäß einer noch anderen Ausführungsform der erfindungsgemäßen Drehgelenkkupplung ist zumindest die im Normalbetrieb höher belastete Kugelschale zum innenverzahnten Ring dadurch eindeutig reproduzierbar in Stellung gebracht, daß einer der Verschlüsse in die zugehörige, sich radial durch den innenverzahnten Ring erstreckende Aussparung eingreift und diese Aussparung so angeordnet ist, daß sie sich bezogen auf ihren Querschnitt mindestens annährend zur Hälfte im innenverzahnten Ring und in der entsprechenden Kugelschale befindet. Auf diese Weise ist ebenfalls ein eindeutiger und sicher reproduzierbarer Formschluß zwischen der Kugelschale und dem innenverzahnten Ring hergestellt.

Vorteilhaft ist dann, wenn die eindeutige Positionierung von Kugelschale und innenverzahntem Ring mittels Stoff- oder Kraftschluß erzielt wird, zumindest die im Normalbetrieb höher belastete Kugelschale in der ihr zugewandten Stirnfläche des innenverzahnten Rings zentriert. Damit wird eine genauere Zentrierung der Kugelschale bezüglich des innenverzahnten Rings erreicht, da die Kugelschale unabhängig vom Gehäuse der Drehgelenkkupplung zentriert ist. Die genauere Zentrierung führt zu einem verbesserten Einlaufverhalten der Drehgelenkkupplung, weil insbesondere der während des Einlaufens auftretende Verschleiß der durch die Kugelsegmente und die Kugelschale gebildeten sphärischen Flächen geringer gehalten werden kann. Die Standzeit der erfindungsgemäßen Drehgelenkkupplung wird damit weiter erhöht. Bevorzugt wird die Zentrierung zumindest der im Normalbetrieb höher belasteten Kugelschale in der ihr zugewandten Stirnfläche des innenverzahnten Rings dadurch erreicht, daß ein umlaufender, aus der Stirnfläche axial hervorspringender Bund den ihm zugewandten Endabschnitt der Kugelschale umgreift.

Die Zentrierung zumindest der im Normalbetrieb höher belasteten Kugelschale allein in der ihr zugewandten Stirnfläche des innenverzahnten Rings mittels des axial aus der Stirnfläche hervorspringenden Bunds erlaubt es auch, den innenverzahnten Ring vorteilhaft beispielsweise mit dem Kopf eines Rotors einer Exzenterschneckenmaschine oder mit einer Antriebswelle zu verbinden, indem der Bund des innenverzahnten Rings und der Rotor oder die Antriebswelle direkt mit zumindest einer im Gehäuse angeordneten Paßfeder gekoppelt sind. Die Paßfeder kann dabei im Vergleich zur herkömmlichen Anordnung, bei der sich die Paßfeder(n) vom innenverzahnten Ring durch eine Kugelschale in den Rotorkopf oder die Antriebswelle erstrecken, kürzer gehalten werden, was die Verbindung zwischen innenverzahntem Ring und Rotorkopf bzw. Antriebswelle und den Kraftfluß durch die Paßfederverbindung verbessert.

Zwar wird die beschriebene Zentrierung zumindest der im Normalbetrieb höher belasteten Kugelschale in der ihr zugewandten Stirnfläche des innenverzahnten Rings bevorzugt zusammen mit einer stoff- oder kraftschlüssigen Verbindung zwischen der entsprechenden Kugelschale und dem innenverzahnten Ring eingesetzt, jedoch kann diese Art der gehäuseunabhängigen Zentrierung mit Vorteil auch alleine, d.h. ohne einen Stoff- oder Kraftschluß zwischen der entsprechenden Kugelschale und dem innenverzahnten Ring angewandt werden.

Mehrere Ausführungsbeispiele der Erfindung werden im folgenden anhand schematischer Zeichnungen näher erläutert. Es zeigt:
- Fig. 1: eine Drehgelenkkupplung einer Exzenterschneckenpumpe in einem axialen Schnitt,
- Fig. 2: die Ansicht II-II in Fig. 1 bei abgenommenem Rotor,
- Fig. 3: eine der Fig. 2 entsprechende Ansicht einer abgewandelten Ausführungsform,
- Fig. 4: eine der Fig. 2 entsprechende Ansicht einer nochmals abgewandelten Ausführungsform,
- Fig. 5: den Schnitt V-V aus Fig. 2, Fig. 3 und Fig. 4,
- Fig. 6: eine andere Ausführungsform einer Drehgelenkkupplung einer Exzenterschneckenpumpe im axialen Schnitt,
- Fig. 7: eine nochmals andere Ausführungsform einer Drehgelenkkupplung einer Exzenterschneckenpumpe im axialen Schnitt, und
- Fig. 8: die Drehgelenkkupplung aus Fig. 7 in einem gegenüber Fig. 7 um 90° gedrehten axialen Schnitt.

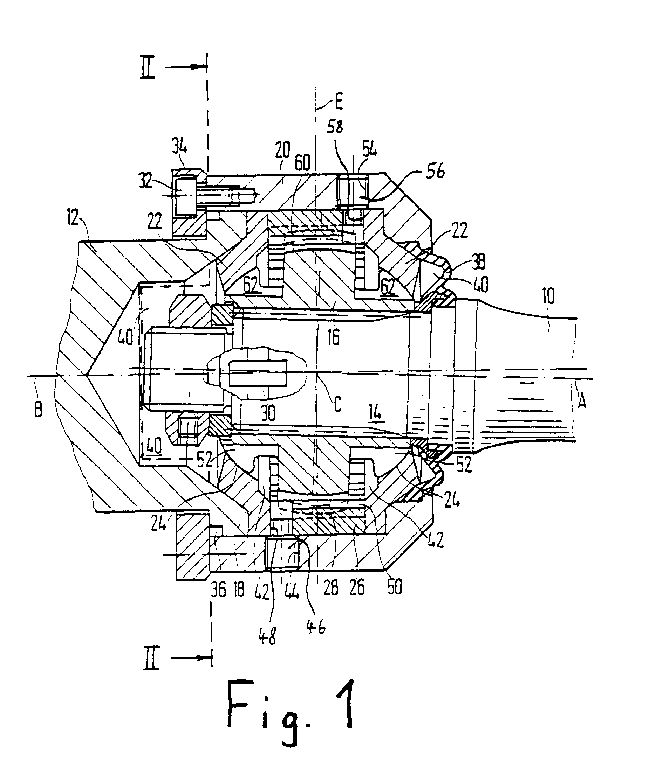

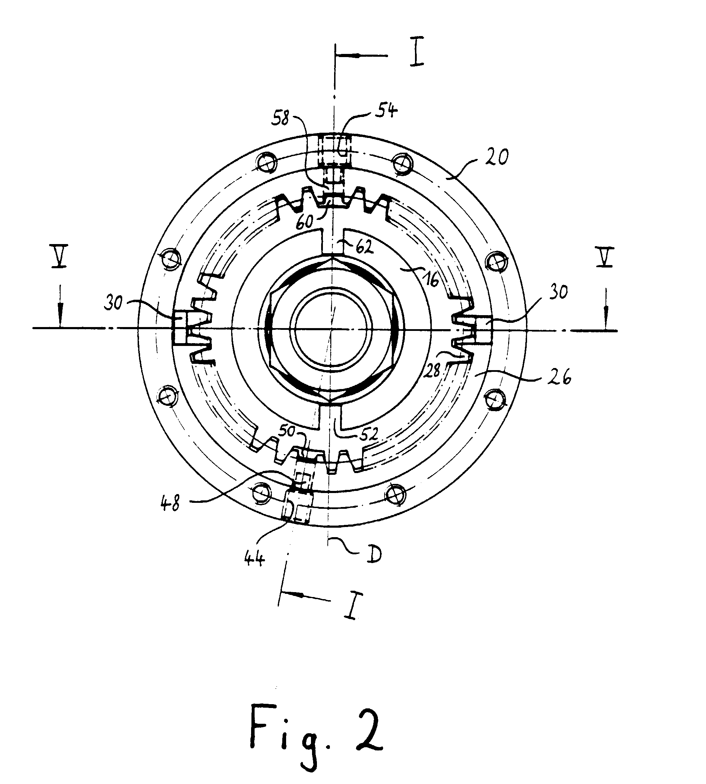

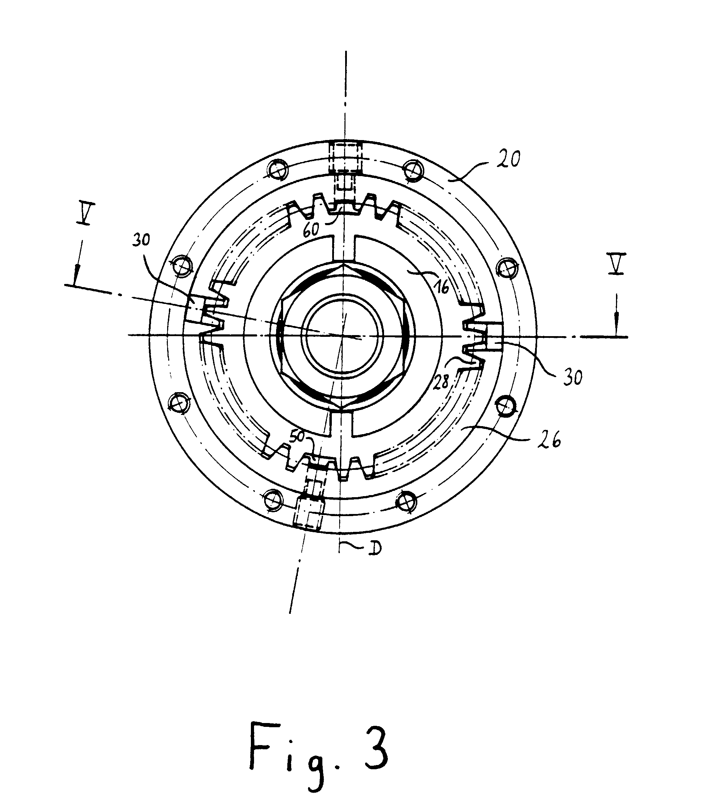

Die in Fig. 1 dargestellte Drehgelenkkupplung verbindet ein Ende einer Gelenkwelle 10 mit einem Ende eines schneckenförmigen Rotors 12 einer Exzenterschneckenpumpe. Die Gelenkwelle 10 ist an ihrem nicht dargestellten Ende durch eine zweite, im wesentlichen gleiche Drehgelenkkupplung mit einer ortsfest gelagerten Antriebswelle verbunden.

An dem dargestellten Ende Gelenkwelle 10 ist ein Zapfen 14 mit Vielnutprofil ausgebildet, auf dem eine im wesentlichen kugelförmige Nabe 16 befestigt ist. Am Ende des Rotors 12 ist ein Bund 18 ausgebildet, an dem ein Gehäuse 20 befestigt ist.

Die geometrischen Achsen A und B der Gelenkwelle 10 und des Rotors 12 schneiden sich in einem Punkt C, der den Mittelpunkt der gesamten Drehgelenkkupplung bildet. Im Betrieb bewegt sich die Achse A der Gelenkwelle 10 auf einer Kegelmantelfläche, deren Spitze der Mittelpunkt der nicht dargestellten zweiten Drehgelenkkupplung ist; die Achse B des Rotors 12 hingegen bewegt sich auf einer Zylindermantelfläche. In jeder Stellung der beiden Achsen A und B ist ihre gemeinsame Ebene eine diametrale Ebene D (siehe Fig. 2). Durch den Mittelpunkt c erstreckt sich eine zur Achse B des Rotors 12 normale Mittelebene E.

Innerhalb des Gehäuses 20 sind zwei Kugelschalen 22 bezüglich des Rotors 12 zentriert und bezüglich der Mittelebene E symmetrisch angeordnet. Die beiden Kugelschalen 22 bilden zusammen mit je einem an der Nabe 16 ausgebildeten Kugelsegment 24 je eine axialkraftübertragende Kupplungspaarung 22, 24. Die aneinanderliegenden Flächen der Kugelschalen 22 und Kugelsegmente 24 sind sphärische Gleitflächen mit dem Mittelpunkt C.

Zwischen den beiden Kugelschalen 22 ist ein innenverzahnter Ring 26 zentrisch bezüglich der Achse B und symmetrisch bezüglich der Mittelebene E im Gehäuse 20 befestigt. Der innenverzahnte Ring 26 bildet zusammen mit einer an der Nabe 16 zwischen den beiden Kugelsegmenten 24 ausgebildeten Außenverzahnung 28 eine drehmomentübertragende Kupplungspaarung 26, 28. Relativdrehungen zwischen dem Gehäuse 20, den Kugelschalen 22 und dem innenverzahnten Ring 26 sind durch im Gehäuse 20 angeordnete Paßfedern 30 verhindert.

Um eine eindeutige, sicher reproduzierbare Stellung der in Fig. 1 linken Kugelschale 22, die im Normalbetrieb der Exzenterschneckenpumpe höher als die in Fig. 1 rechte Kugelschale 22 belastet ist, in bezug auf den innenverzahnten Ring 16 zu gewährleisten, weisen die beiden Paßfedern 30, wie aus Fig. 2 hervorgeht, eine unterschiedliche Breite auf. Die in Fig. 1 linke Kugelschale 22 und der innenverzahnte Ring 26 lassen sich somit trotz der mit gleichmäßigem Umfangsabstand zueinander angeordneten Paßfedern 30 in nur einer einzigen Position zusammenfügen.

In Fig. 3 ist eine abgewandelte Ausführungsform der Drehgelenkkupplung aus Fig. 1 und Fig. 2 dargestellt, bei der die beiden Paßfedern 30 zwar gleich breit sind, dafür aber mit ungleichmäßigem Umfangsabstand zueinander angeordnet sind, d.h. die beiden Paßfedern 30 liegen sich nicht wie in Fig. 2 direkt gegenüber, sondern sind in der Figurenebene zueinander winkelmäßig versetzt angeordnet. Damit ist ebenfalls erreicht, daß die in Fig. 1 linke Kugelschale 22 und der innenverzahnte Ring 26 sich in nur einer einzigen Position zusammenfügen lassen.

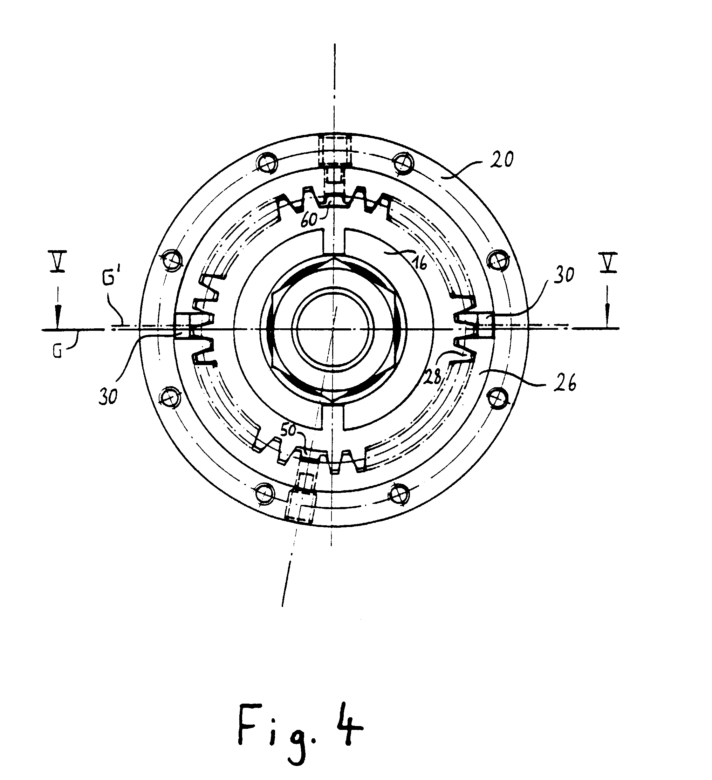

Eine nochmals abgewandelte Ausführungsform der Drehgelenkkupplung zeigt Fig. 4, in der die beiden Paßfedern 30 zwar gleich breit sind und sich direkt gegenüber liegen, dafür aber bezüglich einer durch den Mittelpunkt C verlaufenden Geraden G zur gleichen Seite hin achsparallel verschoben sind. Wie aus Fig. 4 hervorgeht, haben die beiden Paßfedern 30 eine gemeinsame, zur Geraden G parallele Symmetrielinie G'. Diese bezüglich der Geraden G gleichseitig außermittige Anordnung der beiden Paßfedern 30 bewirkt ebenfalls, daß die in Fig. 1 linke Kugelschale 22 und der innenverzahnte Ring 26 in nur einer einzigen Position zusammengefügt werden können.

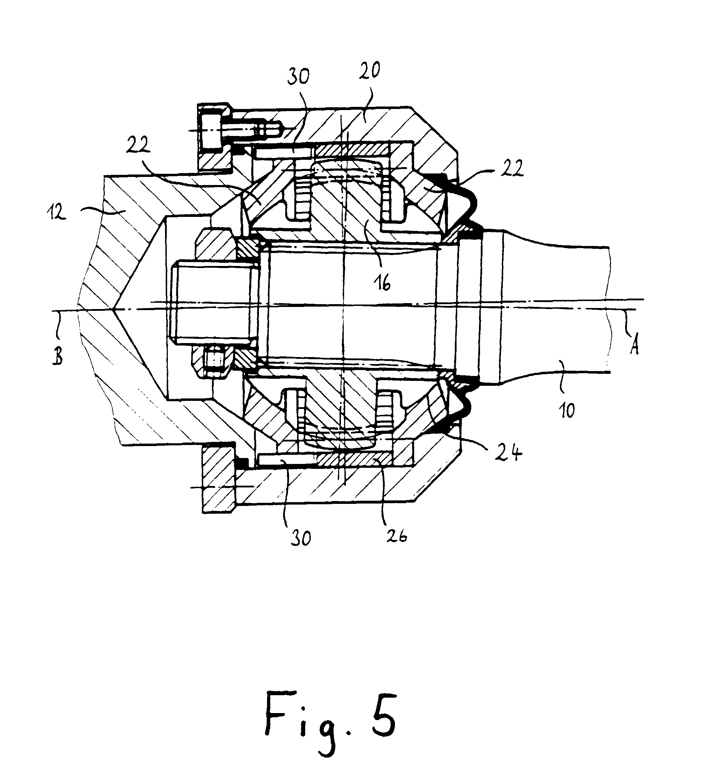

Wie aus Fig. 5 ersichtlich ist, verbinden die beiden Paßfedern 30 den innenverzahnten Ring 26, die in Fig. 1 linke Kugelschale 22, und den Rotor 12 formschlüssig miteinander.

Die gesamte Drehgelenkkupplung ist, wie am besten aus Fig. 1 hervorgeht, in axialer Richtung durch Schrauben 32 zusammengehalten, mit denen ein den Bund 18 übergreifender Ring 34 am Gehäuse 20 befestigt ist. Zwischen dem Ring 34 und dem Bund 18 ist eine Ringdichtung 36 eingespannt. Auf der anderen, in Fig. 1 rechten Seite der Drehgelenkkupplung dichtet eine Manschette 38 das Gehäuse 20 gegen die Gelenkwelle 10 ab.

Innerhalb des Gehäuses 20 ist axial außerhalb der beiden Kugelschalen 22 je ein äußerer Hohlraum 40 ausgebildet. Diese beiden Hohlräume 40 sind ferner durch je eine Stirnseite der Nabe 16 begrenzt. Der in Fig. 1 linke Hohlraum 40 ist außerdem durch den Rotor 12 begrenzt, während der in Fig. 1 rechte Hohlraum 40 zusätzlich durch die Manschette 38 begrenzt ist. Axial innerhalb jeder der beiden Kugelschalen 22 ist je ein ringförmiger Hohlraum 42 angeordnet.

Jeder der Hohlräume 40 und 42 wird nach dem Zusammenbau und vor Inbetriebnahme der Drehgelenkkupplung vollständig mit einem Schmiermittel gefüllt. Zu diesem Zweck weist das Gehäuse 20 an seiner bezüglich der in Fig. 1 gezeigten Stellung unteren Seite einen Schmiermitteleinlaß 44 auf, der von einer radialen Gewindebohrung gebildet und mit einem eingeschraubten Verschluß 46 dicht verschlossen ist. Der Verschluß 46 hat ein zapfenartiges, in bezug auf das Gehäuse 20 radial inneres Ende, das in eine radiale Aussparung 48 des innenverzahnten Rings 26 eingreift. An die Aussparung 48 schließt sich ein zur Achse B des Rotors 12 paralleler Schmiermittelkanal 50 an, der von einer Zahnlücke zwischen zwei Zähnen des innenverzahnten Rings 26 gebildet ist. Im Bereich dieser Zahnlücke fehlt an der Außenverzahnung 28 ein Zahn, so daß der Schmiermittelkanal 50 völlig frei gehalten ist. Die Zahnlücke, die den Schmiermittelkanal 50 bildet, hat in Radialrichtung eine Höhe, die geringer als die Zahnhöhe der Außenverzahnung 28 ist. Durch diese Maßnahme ist es nicht möglich, den innenverzahnten Ring 26 so mit der Außenverzahnung 28 der Nabe 16 zusammenzufügen, daß einer Zähne der Außenverzahnung 28 in den Schmiermittelkanal 50 eingreift.

Der Schmiermittelkanal 50 ist mit seinen beiden Enden unmittelbar an einen radial äußeren Bereich je eines der beiden ringförmigen Hohlräume 42 angeschlossen. In der diametralen Ebene D liegen zwei Überströmkanäle 52 (siehe Fig. 2), die von einem radial inneren Bereich je eines der beiden ringförmigen Hohlräume 42 ausgehend in das entsprechende Kugelsegment 24 eingearbeitet sind und in je einen der axial äußeren Hohlräume 40 münden.

Auf der bezüglich Fig. 1 oberen Seite des Gehäuses 20 ist ein Luftauslaß 54 angeordnet, der von einer radialen Gewindebohrung gleicher Größe wie der Schmiermitteleinlaß 44 gebildet und ebenfalls mit einem eingeschraubten Verschluß 56 dicht verschlossen ist. Der Luftauslaß 54 ist über eine Aussparung 58 an denjenigen ringförmigen Hohlraum 42 angeschlossen, der mit dem Schmiermitteleinlaß 44 keine unmittelbare radiale Verbindung hat. Die beiden ringförmigen Hohlräume 42 sind durch einen Luftaustritts- und Schmiermittelkanal 60 miteinander verbunden. In derselben diametralen Ebene D wie dieser Luftaustritts- und Schmiermittelkanal 60 ist ein weiteres Paar Überströmkanäle 62 angeordnet, die je einen der axial äußeren Hohlräume 40 mit dem angrenzenden ringförmigen Hohlraum verbinden.

Damit eine eindeutige und sicher reproduzierbare Stellung der Nabe 16 und des innenverzahnten Rings 26 zueinander gewährleistet ist, sind der Schmiermitteleinlaß 44, die radiale Aussparung 48 und der Schmiermittelkanal 50 nicht auf derselben diametralen Ebene D angeordnet wie der Luftauslaß 54, dessen zugehörige Aussparung 58 und der Schmiermittelkanal 60 (siehe Fig. 2). Statt dessen sind, wie aus Fig. 2 zu ersehen ist, die Schmiermittelkanäle 50 und 60 um mindestens einen Zahn versetzt zueinander angeordnet. Während bei ungerader Zähnezahl der drehmomentübertragenden Kupplungspaarung 26, 28 eine Anordnung der Schmiermittelkanäle 50 und 60 auf derselben diametralen Ebene D ohnehin nicht möglich ist, muß bei gerader Zähnezahl der drehmomentübertragenden Kupplungspaarung 26, 28 darauf geachtet werden, daß die Anzahl der Zähne, die sich zwischen den Schmiermittelkanälen 50 und 60 befindet, nicht gleichgroß ist, sondern sich um mindestens zwei Zähne unterscheidet. So ist sichergestellt, daß die Nabe 16 und der innenverzahnte Ring 26 in nur einer einzigen Position zusammengefügt werden können. In diesem Zusammenhang sei darauf hingewiesen, daß Fig. 1 den Axialschnitt I-I aus Fig. 2 zeigt.

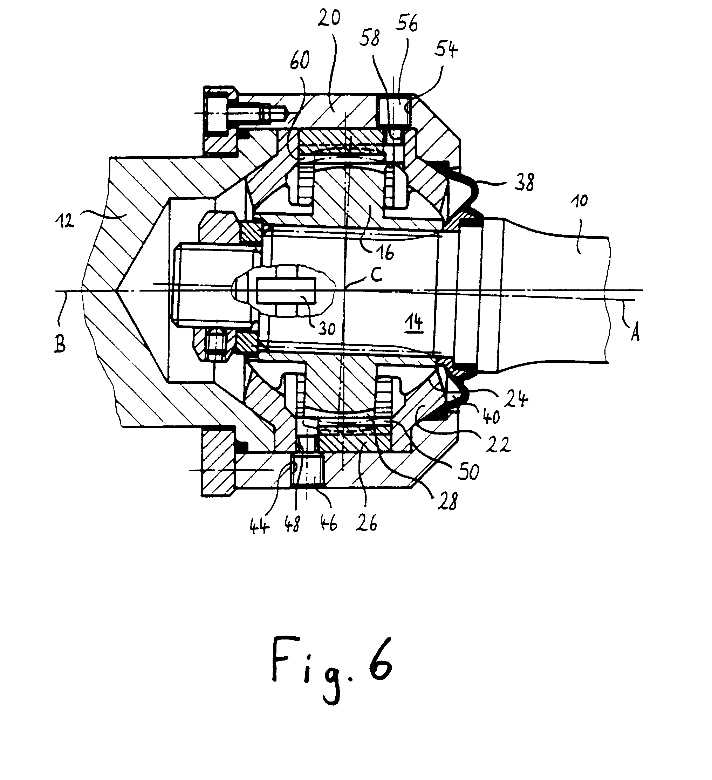

In Fig. 6 ist eine weitere Möglichkeit dargestellt, einen Formschluß zwischen einer der Kugelschalen 22 und dem innenverzahnten Ring 26 zu erzielen, der eine eindeutige Positionierung der entsprechenden Kugelschale 22 und des innenverzahnten Rings 26 zueinander sichert. In Abweichung zu der in Fig. 1 gezeigten Ausführungsform der Drehgelenkkupplung sind der Luftauslaß 54 und die zugehörige Aussparung 58 so angeordnet, daß sich die Aussparung 58, bezogen auf ihren Querschnitt, nicht nur durch den innenverzahnten Ring 26, sondern auch durch einen Teil der in Fig. 6 rechten Kugelschale 22 erstreckt, d.h. Luftauslaß 54 und Aussparung 58 sind gegenüber Fig. 1 um die Hälfte ihres Durchmessers nach rechts verschoben, so daß sich die rechte Kugelschale 22 und der innenverzahnte Ring 26 in nur einzigen Position zusammenfügen lassen. Diese konstruktive Maßnahme läßt sich ebensogut am Schmiermitteleinlaß 44 und seiner zugehörigen Aussparung 48 anwenden.

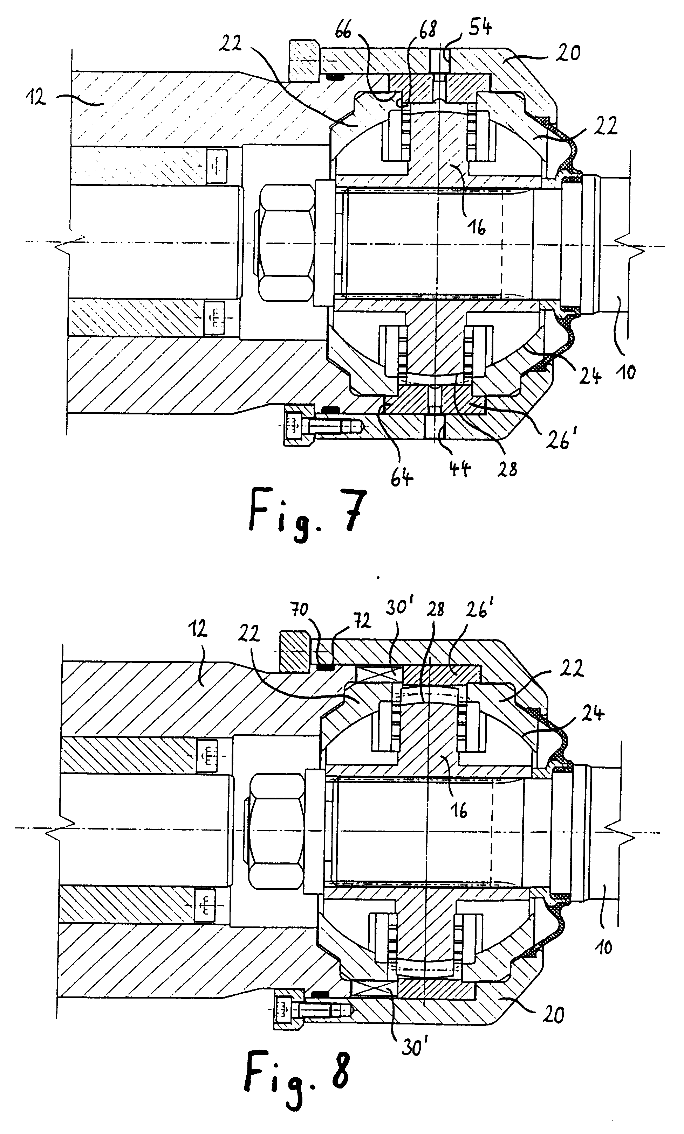

Fig. 7 zeigt eine abgewandelte Ausführungsform der Drehgelenkkupplung, bei der die eindeutige Positionierung zumindest der im Normalbetrieb höher belasteten, in Fig. 7 linken Kugelschale 22 und des innenverzahnten Rings 26' zueinander nicht durch Formschluß, sondern durch Kraft- oder Stoffschluß erreicht ist. Hierzu weist der innenverzahnte Ring 26' einen umlaufenden, aus seiner der linken Kugelschale 22 zugewandten Stirnfläche axial hervorspringenden Bund 64 auf, der einen Endbereich der linken Kugelschale 22 umgreift und letztere dadurch bezüglich des Rings 26' zentriert. Zur Erzielung eines Kraftschlusses wird dabei der innenverzahnte Ring 26' mittels seines Bunds 64 auf den ihm zugewandten Endbereich der Kugelschale 22 aufgeschrumpft. Zur Erzielung eines Stoffschlusses wird die Kugelschale 22 mantelflächenseitig bei 66 und/oder stirnseitig bei 68 mit dem innenverzahnten Ring 26' verklebt.

Aus Gründen einer einfachereren Fertigung sind bei dieser Ausführungsform sowohl der Schmiermitteleinlaß 44 als auch der Luftauslaß 54 und die zugehörigen Aussparungen auf einer gemeinsamen Umfangslinie angeordnet. Wie Fig. 8 zeigt, bietet die in Fig. 7 dargestellte Ausführungsform die Möglichkeit, den innenverzahnten Ring 26' mittels kürzerer Paßfedern 30' direkt mit dem Rotor 12 formschlüssig zu koppeln.

Abweichend zur in Fig. 1 dargestellten Ausführungsform ist zwischen dem Gehäuse 20 und dem Rotor 12 eine Dichtung vorgesehen, die aus zwei in einer Umfangsnut des Rotors 12 nebeneinanderliegenden O-Ringen 70 und 72 besteht. Diese Art der Dichtung ermöglicht es, das Material des O-Rings 70 auf das Fördermedium der Exzenterschneckenpumpe abzustimmen, während der O-Ring 72 auf das in die Drehgelenkkupplung eingefüllte Schmiermittel abgestimmt ist.

## Patentansprüche

1. Drehgelenkkupplung, insbesondere an einer Gelenkwelle einer Exzenterschneckenmaschine, mit
- zwei axialkraftübertragenden Kupplungspaarungen (22, 24), die je eine Kugelschale (22) und ein darin gelagertes Kugelsegment (24) aufweisen,
- einer drehmomentübertragenden Kupplungspaarung (26, 28), die zwischen den beiden axialkraftübertragenden Kupplungspaarungen (22, 24) angeordnet ist,
- einem Gehäuse (20), das die Kupplungspaarungen (22, 24; 26, 28) umschließt und zwischen jeder der beiden axialkraftübertragenden Kupplungspaarungen (22, 24) und der drehmomentübertragenden Kupplungspaarung (26, 28) je einen ringförmigen Hohlraum (42) aufweist, und mit
- einem Schmiermitteleinlaß (44) und einem Luftauslaß (54) am Gehäuse (20), die je einen Verschluß (46 bzw. 56) aufweisen und mit je einem der ringförmigen Hohlräume (42) in Verbindung stehen,
- wobei die drehmomentübertragende Kupplungspaarung (26, 28) in zwei konzentrischen Kränzen angeordnete Nuten aufweist, die sich zwischen den beiden ringförmigen Hohlräumen (42) erstrekken, durch Zahnlücken eines in das Gehäuse (20) eingesetzten, innenverzahnten Rings (26) bzw. einer Außenverzahnung (28) gebildet sind und zur Drehmomentübertragung mit Gegenkörpern zusammenwirken, an deren Profil das Nutprofil angepaßt ist,
- wobei nahe dem Schmiermitteleinlaß (44) und dem Luftauslaß (54) je ein Gegenkörper fortgelassen und dadurch je eine Nut als Schmiermittelkanal (50 bzw. 60) zwischen den beiden ringförmigen Hohlräumen (42) freigelassen ist, und
- wobei die Außenverzahnung (28) Teil einer Nabe (16) ist, an der auch die Kugelsegmente (24) ausgebildet sind,
dadurch gekennzeichnet, daß
einerseits die Kugelschale (22) zumindest der im Normalbetrieb höherbelasteten axialkraftübertragenden Kupplungspaarung (22, 24) und der innenverzahnte Ring (26, 26') entweder durch Stoffschluß oder durch Kraftschluß oder durch die Symmetrie der zu verbindenden Elemente (22, 26; 22, 26') aufhebende, formschlüssige Mittel miteinander verbunden sind, und andererseits der innenverzahnte Ring (26, 26') und die Nabe (16) durch die Symmetrie der gepaarten Elemente (16, 26; 16, 26') aufhebende Maßnahmen miteinander verbunden sind.

2. Drehgelenkkupplung nach Anspruch 1,
dadurch gekennzeichnet, daß zwei Zähne der Außenverzahnung (28) als Gegenkörper fortgelassen sind und die beiden als Schmiermittelkanäle (50, 60) ausgebildeten Nuten eine Tiefe haben, die geringer als die Zahnhöhe der Außenverzahnung (28) ist.

3. Drehgelenkkupplung nach Anspruch 2,
dadurch gekennzeichnet, daß die drehmomentübertragende Kupplungspaarung (26, 28) eine ungerade Zähnezahl aufweist.

4. Drehgelenkkupplung nach Anspruch 2,
dadurch gekennzeichnet, daß die drehmomentübertragende Kupplungspaarung (26, 28) eine gerade Zähnezahl aufweist und die Anzahl der Zähne, die sich im Uhrzeigersinn zwischen dem ersten Schmiermittelkanal (50) und dem zweiten Schmiermittelkanal (60) befindet, sich von der im Gegenuhrzeigersinn zwischen dem ersten Schmiermittelkanal (50) und dem zweiten Schmiermittelkanal (60) befindenden Anzahl der Zähne um mindestens zwei unterscheidet.

5. Drehgelenkkupplung nach Anspruch 1 oder 2,
dadurch gekennzeichnet, daß die drehmomentübertragende Kupplungspaarung (26, 28) eine unregelmäßige Zahnteilung aufweist.

6. Drehgelenkkupplung nach einem der Ansprüche 1 bis 5,
dadurch gekennzeichnet, daß zumindest die im Normalbetrieb höher belastete Kugelschale (22) mit dem innenverzahnten Ring (26) durch mindestens zwei im Gehäuse (20) angeordnete Paßfedern (30) unterschiedlicher Breite formschlüssig verbunden ist.

7. Drehgelenkkupplung nach einem der Ansprüche 1 bis 5,
dadurch gekennzeichnet, daß zumindest die im Normalbetrieb höher belastete Kugelschale (22) mit dem innenverzahnten Ring (26) durch mindestens zwei im Gehäuse (20) angeordnete Paßfedern (30) formschlüssig verbunden ist, deren Umfangsabstand voneinander ungleichmäßig ist.

8. Drehgelenkkupplung nach einem der Ansprüche 1 bis 5,
dadurch gekennzeichnet, daß zumindest die im Normalbetrieb höher belastete Kugelschale (22) mit dem innenverzahnten Ring (26) durch mindestens zwei im Gehäuse (20) angeordnete Paßfedern (30) formschlüssig verbunden ist, die in einem Querschnitt normal zur Gehäuselängsachse eine gemeinsame Symmetrielinie aufweisen, die zu einer durch den Mittelpunkt (C) der Drehgelenkkupplung verlaufenden Geraden achsparallel verschoben ist.

9. Drehgelenkkupplung nach einem der Ansprüche 1 bis 5,
dadurch gekennzeichnet, daß zumindest die im Normalbetrieb höher belastete Kugelschale (22) in der ihr zugewandten Stirnfläche des innenverzahnten Rings (26') zentriert ist.

10. Drehgelenkkupplung nach Anspruch 9,
dadurch gekennzeichnet, daß ein umlaufender, aus der Stirnfläche axial hervorspringender Bund (64) den ihm zugewandten Endabschnitt der Kugelschale (22) umgreift und mindestens eine im Gehäuse (20) angeordnete Paßfeder (30') den Bund (64) des innenverzahnten Rings (26') mit einem Rotor (12) oder mit einer Antriebswelle verbindet.

11. Drehgelenkkupplung nach einem der vorhergehenden Ansprüche, dadurch gekennzeichnet, daß der Schmiermitteleinlaß (44) und der Luftauslaß (54) mit je einer Aussparung (48 bzw. 58) fluchten, die sich radial durch den innenverzahnten Ring (26, 26') erstreckt und in einem Schmiermittelkanal (50 bzw. 60) mündet.

12. Drehgelenkkupplung nach Anspruch 11,
dadurch gekennzeichnet, daß zumindest die im Normalbetrieb höher belastete Kugelschale (22) mit dem innenverzahnten Ring (26) formschlüssig verbunden ist, indem einer der Verschlüsse (46 bzw. 56) in die zugehörige Aussparung (48 bzw. 58) eingreift, die so angeordnet ist, daß sie sich bezogen auf ihren Querschnitt zur Hälfte im innenverzahnten Ring (26) und in der Kugelschale (22) befindet.

## Claims

1. A universal joint coupling, in particular arranged on a universal joint shaft of an eccentric worm machine, comprising,
- two axial force transmitting pairs of coupling members (22, 24), each pair including a spherical cup (22) and a ball segment (24) supported therein,
- a torque transmitting pair of coupling members (26, 28) arranged between the two pairs of axial force transmitting coupling members (22, 24),
- a housing (20) enclosing the pairs of coupling members (22, 24; 26, 28) and having an annular hollow space (42) between each one of the two axial force transmitting pairs of coupling members (22, 24) and the torque transmitting pair of coupling members (26, 28), respectively, and further comprising
- a lubricant inlet (44) and an air outlet (54) at the housing (20), each having a closure member (46 and 56, respectively) and communicating with one each of the annular hollow spaces (42),
- wherein the torque transmitting pair of coupling members (26, 28) has grooves which are arranged in two concentric rows and which extend between the two annular hollow spaces (42), are defined by gaps of an internal gear ring (26) fitted into the housing (20), or an external toothing (28), and cooperate for torque transmission with counter-acting bodies, the profile of which matches the groove profile,
- wherein proximate to the lubricant inlet (44) and the air outlet (54), respectively, one counter-acting body has been omitted thereby defining one groove, respectively, as lubricant passage (50 and 60, respectively) between the two annular hollow spaces (42), and
- wherein the external toothing (28) forms part of a hub (16) on which also the ball segments (24) are formed,
characterized in that,
on the one hand, the spherical cup (22), of at least the axial force transmitting pair of coupling members (22, 24) which is higher loaded during normal operation, and the internal gear ring (26, 26') are connected to each other either by material bond or frictional connection or by positive means eliminating the symmetry of the elements to be connected (22, 26; 22, 26') and, on the other hand, the internal gear ring (26, 26') and the hub (16) are connected to each other by means eliminating the symmetry of the paired elements (16, 26; 16, 26').

2. The universal joint coupling as claimed in claim 1, characterized in that two teeth of the external toothing (28) constituting counter-acting bodies have been omitted and the two grooves formed as lubricant passages (50,60) have a depth less than the tooth depth of the external toothing (28).

3. The universal joint coupling as claimed in claim 2, characterized in that the torque transmitting pair of coupling members (26, 28) has an uneven number of teeth.

4. The universal joint coupling as claimed in claim 2, characterized in that the torque transmitting pair of coupling members (26, 28) has an even number of teeth, wherein the number of teeth located between the first lubricant passage (50) and the second lubricant passage (60), as seen in clockwise direction, differs by at least two from the number of teeth located between the first lubricant passage (50) and the second lubricant passage (60), as seen in counterclockwise direction.

5. The universal joint coupling as claimed in claim 1 or claim 2,
characterized in that the torque transmitting pair of coupling members (26, 28) has an irregular tooth pitch.

6. The universal joint coupling as claimed in any one of claims 1 to 5,
characterized in that at least the spherical cup (22) being higher loaded during normal operation is connected positively to the internal gear ring (26) by means of at least two feather keys (30) of different width which are arranged in the housing.

7. The universal joint coupling as claimed in any one of claims 1 to 5,
characterized in that at least the spherical cup (22) being higher loaded during normal operation is connected positively to the internal gear ring (26) by means of at least two feather keys (30) arranged in the housing (20) which have an uneven circumferential spacing from each other.

8. The universal joint coupling as claimed in any one of claims 1 to 5,
characterized in that at least the spherical cup (22) being higher loaded during normal operation is connected positively to the internal gear ring (26) by means of at least two feather keys (30) arranged in the housing (20) which have a common line of symmetry in a cross section normal to the longitudinal axis of the housing, which is displaced in axis-parallel relation with respect to a straight line extending through the center (C) of the universal joint coupling.

9. The universal joint coupling as claimed in any one of claims 1 to 5,
characterized in that at least the spherical cup (22) being higher loaded during normal operation is centered in the end face of the internal gear ring (26') facing said spherical cup (22).

10. The universal joint coupling as claimed in claim 9,
characterized in that a circumferentially extending collar (64) axially projecting from said end face embraces the end section of the spherical cup (22) which faces said collar, and at least one feather key (30') arranged in the housing (20) connect the collar (64) of the internal gear ring (26') to a rotor (12) or a drive shaft.

11. The universal joint coupling as claimed in any one of the previous claims,
characterized in that the lubricant inlet (44) and the air outlet (54) are in alignment with one recess, respectively (48 and 58, respectively), extending radially through the internal gear ring (26, 26') and opening in a lubricant passage (50 and 60, respectively).

12. The universal joint coupling as claimed in claim 11,
characterized in that at least the spherical cup (22) being higher loaded during normal operation is connected positively to the internal gear ring (26) in that one of the closure members (46 and 56, respectively) engages the associated recess (48 and 58, respectively) which is arranged such that, based on its cross section, half of it is located in the internal gear ring (26) and in the spherical cup (22).

## Revendications

1. Dispositif d'accouplement à articulation, en particulier sur un arbre articulé d'une machine à vis excentrique, comprenant
- deux paires de dispositifs d'accouplement (22, 24) transmettant des forces axiales qui présentent chacun une calotte sphérique (22) et un segment sphérique (24) monté tournant dans celle-ci,
- une paire de dispositifs d'accouplement (26, 28) transmettant des couples de rotation qui sont disposés entre les deux paires de dispositifs d'accouplement (22, 24) transmettant des forces axiales,
- un boîtier (20) qui entoure les paires de dispositifs d'accouplement (22, 24; 26, 28) et qui présente entre chacune des deux paires de dispositifs d'accouplement (22, 24) transmettant des forces axiales et des paires de dispositifs d'accouplement (26, 28) transmettant des couples de rotation un espace vide annulaire (42) respectif, et comprenant
- une admission de lubrifiant (44) et une sortie d'air (54) sur le boîtier (20) qui présentent chacune un obturateur (46 respectivement 56) et sont chacune en communication avec un espace vide annulaire (42),
- dans lequel la paire de dispositifs d'accouplement (26, 28) transmettant des couples de rotation présente des rainures disposées dans deux couronnes concentriques qui s'étendent entre les deux espaces vides annulaires (42) qui sont formées par des entredents d'un anneau (26) logé dans le boîtier (20) pourvu d'une denture intérieure respectivement d'une denture extérieure (28) et qui coopèrent, pour transmettre des couples de rotation, avec des corps antagonistes au profil desquels le profil des rainures est adapté,
- dans lequel à proximité de l'admission de lubrifiant (44) et de la sortie d'air (54) le corps antagoniste respectif est omis et une rainure est ainsi libérée pour servir de canal de lubrifiant (50 respectivement 60) entre les deux espaces vides annulaires (42), et
- dans lequel la denture extérieure (28) fait partie d'un moyeu (10) sur lequel sont aussi formés les segments sphériques (24),
caractérisé en ce que
d'une part la calotte sphérique (22) d'au moins la paire de dispositifs d'accouplement (22, 24) transmettant des forces axiales la plus fortement chargée en service normal et l'anneau à denture intérieure (26, 26') sont reliés entre eux soit par liaison de matière soit par adhérence soit par des moyens mécaniques supprimant la symétrie des éléments à réunir (22, 26; 22, 26'), et d'autre part l'anneau à denture intérieure (26, 26') et le moyeu (16) sont reliés entre eux par des mesures supprimant la symétrie des éléments appariés (16, 26; 16, 26').

2. Dispositif d'accouplement à articulation selon la revendication 1,
caractérisé en ce que deux dents de la denture extérieure (28) en tant que corps antagoniste sont omises et les deux rainures formées comme canaux de lubrifiant (50, 60) possèdent une profondeur qui est plus faible que la hauteur des dents de la denture extérieure (28).

3. Dispositif d'accouplement à articulation selon la revendication 2,
caractérisé en ce que la paire de dispositifs d'accouplement (26, 28) transmettant des couples de rotation présente un nombre de dents impair.

4. Dispositif d'accouplement à articulation selon la revendication 2,
caractérisé en ce que la paire de dispositifs d'accouplement (26, 28) transmettant des couples de rotation présente un nombre de dents pair et le nombre des dents qui se trouvent dans le sens des aiguilles d'une montre entre le premier canal de lubrifiant (50) et le deuxième canal de lubrifiant (60) est différent du nombre des dents qui se trouvent dans le sens opposé à celui des aiguilles d'une montre entre le premier canal de lubrifiant (50) et le deuxième canal de lubrifiant (60).

5. Dispositif d'accouplement à articulation selon la revendication 1 ou 2,
caractérisé en ce que la paire de dispositifs d'accouplement (26, 28) transmettant des couples de rotation présente un pas de dents irrégulier.

6. Dispositif d'accouplement à articulation selon l'une quelconque des revendications 1 à 5,
caractérisé en ce qu'au moins la calotte sphérique (22) la plus fortement chargée en service normal est reliée mécaniquement à l'anneau à denture intérieure (26) par au moins deux clavettes (30) de largeurs différentes disposées dans le boîtier (20).

7. Dispositif d'accouplement à articulation selon l'une quelconque des revendications 1 à 5,
caractérisé en ce qu'au moins la calotte sphérique (22) la plus fortement chargée en service normal est reliée mécaniquement à l'anneau à denture intérieure (26) par au moins deux clavettes (30) disposées dans le boîtier (20), dont les distances périphériques mutuelles ne sont pas constantes.

8. Dispositif d'accouplement à articulation selon l'une quelconque des revendications 1 à 5,
caractérisé en ce qu'au moins la calotte sphérique (22) la plus fortement chargée en service normal est reliée mécaniquement à l'anneau à denture intérieure (26) par au moins deux clavettes (30) disposées dans le boîtier (20), qui présentent dans une coupe normale par rapport à l'axe longitudinal du boîtier une ligne de symétrie commune qui est décalée parallèlement à l'axe vers une droite passant par le centre (C) du dispositif d'accouplement à articulation.

9. Dispositif d'accouplement à articulation selon l'une quelconque des revendications 1 à 5,
caractérisé en ce qu'au moins la calotte sphérique (22) la plus fortement chargée en service normal est centrée dans la surface frontale dirigée vers elle de l'anneau (26') à denture intérieure.

10. Dispositif d'accouplement à articulation selon la revendications 9,
caractérisé en ce qu'un rebord (64) périphérique faisant saillie axialement de la surface frontale entoure la portion d'extrémité dirigée vers lui de la calotte sphérique (22) et en ce qu'au moins une clavette (30') disposée dans le boîtier (20) relie le rebord (64) de l'anneau (26') à denture intérieure à un rotor (12) ou à un arbre moteur.

11. Dispositif d'accouplement à articulation selon l'une quelconque des revendications précédentes,
caractérisé en ce que l'admission de lubrifiant (44) et la sortie d'air (54) sont en alignement chacune avec un évidement (48 respectivement 58) qui s'étend radialement à travers l'anneau (26, 26') à denture intérieure et débouche dans un canal de lubrifiant (50 respectivement 60).

12. Dispositif d'accouplement selon la revendication 11,
caractérisé en ce qu'au moins la calotte sphérique (22) la plus fortement chargée en service normal est reliée mécaniquement à l'anneau (26) à denture intérieure par le fait qu'un des obturateurs (46 respectivement 56) pénètre dans l'évidement associé (48 respectivement 58) qui est disposé de telle façon qu'il se trouve, en ce qui concerne sa section, à moitié dans l'anneau (26) à denture intérieure et dans la calotte sphérique (22).
